# EUROPEAN PATENT APPLICATION

(11) **EP 4 822 416 A1**
(43) Date of publication of application: **14.10.2026**
(21) Application number: 26169597.7
(22) Date of filing: 31.03.2026
(51) Int. Cl.: G02B 6/44, G02B 6/38, G02B 6/42, H01B 11/22

(54) **ACTIVE OPTICAL CABLE CONNECTION STRUCTURE**

(30) Priority: 10.04.2025 JP 2025064817
(71) Applicant: Yazaki Corporation, Tokyo 108-0075 (JP)
(72) Inventor: Yamagata, Chiemi, Susono-shi, Shizuoka, 410-1194 (JP); Komai, Katsuya, Susono-shi, Shizuoka, 410-1194 (JP); Fujihira, Katsuya, Susono-shi, Shizuoka, 410-1194 (JP); Serizawa, Naoshi, Susono-shi, Shizuoka, 410-1194 (JP); Oishi, Eiichiro, Susono-shi, Shizuoka, 410-1194 (JP); Endo, Takashi, Susono-shi, Shizuoka, 410-1194 (JP)
(74) Representative: Grünecker Patent- und Rechtsanwälte PartG mbB

(57) **Abstract**

An active optical cable connection structure (1) includes: a flat cable (10); an optical fiber cable (50) that is routed along an upper surface of the flat cable (10); a pair of first electrical connectors (30, 30) connected to the flat cable (10); and a pair of optical active connectors (40, 40) connected to the pair of first electrical connectors (30, 30) and provided at both ends of the optical fiber cable (50).

## Description

### TECHNICAL FIELD

The present invention relates to an active optical cable connection structure.

### BACKGROUND

An active optical cable (AOC) enables long-distance transmission by converting an electric signal into an optical signal and transmitting the optical signal to an optical fiber, and can be directly connected to a conventionally used in-car electrical connector. JP 2019-168606 A discloses an active optical cable that includes modules at both ends of an optical fiber cable and optical fiber transceivers, control chips, and the like inside the modules.

### SUMMARY OF THE INVENTION

Since the circuits that include the optical axis alignment members and the control chips are included in the connectors at both ends of the active optical cable as disclosed in JP 2019-168606 A, there is a problem that the reliability is degraded by receiving some kind of shock when the cable is routed to an automobile after being integrated with a wiring harness.

The present invention has been made in view of such problems of the conventional technology. An object of the present invention is to provide an active optical cable connection structure in which reliability is improved by integrating an active optical cable and a flat cable.

An active optical cable connection structure according to an aspect of the present invention includes: a flat cable; an optical fiber cable that is routed along an upper surface of the flat cable; a pair of first electrical connectors connected to the flat cable; and a pair of optical active connectors connected to the pair of first electrical connectors and provided at both ends of the optical fiber cable.

According to the present invention, it is possible to provide an active optical cable connection structure in which reliability is improved by integrating an active optical cable and a flat cable.

### BRIEF DESCRIPTION OF THE DRAWINGS

FIG. 1 is a side view illustrating an example of an active optical cable connection structure.
FIG. 2 is a plan view of the active optical cable connection structure illustrated in FIG. 1.

### DETAILED DESCRIPTION OF THE INVENTION

Hereinafter, an active optical cable connection structure according to an embodiment of the present invention will be described in detail with reference to the drawings. Note that the dimensional ratio of the drawings is exaggerated for the sake of description and may be different from the actual ratio.

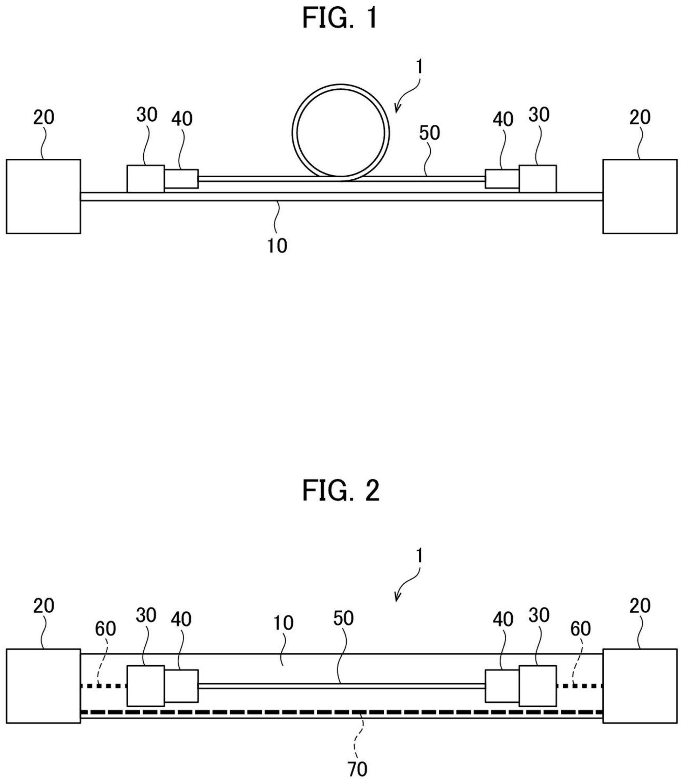

As illustrated in FIGS. 1 and 2, the active optical cable connection structure 1 according to the present embodiment includes a flat cable 10 and an optical fiber cable 50 that is routed along the upper surface of the flat cable 10. The active optical cable connection structure 1 includes a pair of first electrical connectors 30 and 30 connected to the flat cable 10, and a pair of optical active connectors 40 and 40 connected to the pair of first electrical connectors 30 and 30 and provided at both ends of the optical fiber cable 50. Further, the active optical cable connection structure 1 may include a pair of second electrical connectors 20 and 20 at both ends of the flat cable 10.

Examples of the flat cable 10 include flexible printed circuits (FPC) and flexible flat cables (FFC). The flat cable 10 has a role of supplying a power source for driving the optical connector and performing electrical communication. The electrical communication includes a clock extension peripheral interface (CXPI), a controller area network (CAN), and a local interconnect network (LIN), for example.

The optical fiber cable 50 has an optical fiber core and a covering layer that covers the optical fiber core and is composed of one or a plurality of layers. The optical fiber cable 50 may include, for example, an optical fiber core, a primary covering that covers the optical fiber core, and a secondary covering that covers the primary covering. The optical fiber core is referred to as a core, and the covering layers (primary covering and secondary covering) are also referred to as cladding. The optical fiber cable 50 is formed of the core that serves as a propagation path for an optical signal, and the cladding that serves to confine light into the core and ensure mechanical strength.

The optical fiber core has a function of transmitting an optical signal, and may be, for example, a plastic optical fiber (POF) or a glass optical fiber (GOF). The optical fiber core may have a diameter of 50 µm, 62.5 µm, 100 µm, or the like, for example. In addition, the refractive index of the optical fiber core may be the same from the center to the outer periphery, or may be changed smoothly from the center to the outer periphery.

The primary covering is formed of a material having a lower refractive index than that of the optical fiber core, and has a function of refracting an optical signal incident into the optical fiber core. In addition, the primary coating serves to prevent optical transmission loss that would occur when external forces applied to the optical fiber cable cause minute deformation of the cladding portion, which is then transmitted to the core. Therefore, the primary covering may be a flexible resin layer or may contain a synthetic resin such as polyvinyl chloride (PVC) or polyolefin. Further, the secondary covering may be a resin layer harder than the primary covering in order to ensure the mechanical strength of the optical fiber cable 50.

The active optical cable connection structure 1 includes the pair of first electrical connectors 30 and 30 connected to the flat cable 10. The pair of optical active connectors 40 and 40 provided at both ends of the optical fiber cable 50 are connected to the pair of first electrical connectors 30 and 30, respectively. Thus, the optical fiber cable 50 and the flat cable 10 have an integrated structure.

The active optical cable connection structure 1 includes the pair of optical active connectors 40 and 40 at both ends of the optical fiber cable 50 and functions as an active optical cable. Further, the optical active connectors 40 and 40 have a photoelectric conversion function and an optical transmission function.

The active optical cable connection structure 1 may include the pair of second electrical connectors 20 and 20 at both ends of the flat cable 10. For example, when transmitting signals from the first external device (not illustrated) to the second external device (not illustrated), in FIG. 2, the first external device and the second external device are respectively connected to the active optical cable connection structure 1 by the pair of second electrical connectors 20 and 20. An electrical signal 60 transmitted from the first external device is converted into an optical signal by one of the optical active connectors 40, and the optical signal acquired by this conversion is transmitted to the other optical active connector 40 via the optical fiber cable 50. The optical signal is then converted into an electrical signal by the other optical active connector 40, and an electrical signal 60 acquired by this conversion is output to the second external device. As described above, the active optical cable connection structure 1 enables long-distance transmission by converting an electrical signal into an optical signal and transmitting the optical signal to an optical fiber. It is possible to transmit data at a higher speed than when an electrical signal 70 is transmitted from the first external device to the second external device.

The active optical cable connection structure 1 includes the flat cable 10 and the optical fiber cable 50 that is routed along the upper surface of the flat cable 10. The active optical cable connection structure 1 includes the pair of first electrical connectors 30 and 30 connected to the flat cable 10, and the pair of optical active connectors 40 and 40 connected to the pair of first electrical connectors 30 and 30 and provided at both ends of the optical fiber cable 50. Therefore, the active optical cable connection structure 1 integrates the active optical cable and the flat cable 10. The active optical cable connection structure 1 can suppress the deterioration of reliability due to impact at the time of routing by fixing and routing the optical fiber cable 50 to the flat cable 10 after mounting the wiring harness or the flat cable 10. Further, by installing and laying the optical fiber cable 50 along the flat cable 10, installation and laying at the time of routing can be simplified.

Although a general active optical cable includes USB connectors or MPO connectors at both ends, the active optical cable connection structure 1 may include the pair of second electrical connectors 20 and 20 at both ends of the flat cable 10 as described above. That is, by providing the second electrical connectors 20 in the active optical cable connection structure 1, for example, in-vehicle connectors can be used as the connection interface. By mounting the connectors of the active optical cable on the flat cable 10 in this way, it is possible to make it less likely for the active optical cable to be subjected to impact. Further, since the active optical cable connection structure 1 can be adapted to conventionally used in-vehicle electrical connectors, changes in the inspection process can be reduced.

Since the active optical cable connection structure 1 has the function of the active optical cable, mounting of reflow-compatible optical coupling components (lens, prism, etc.) is unnecessary, thereby increasing the choice of materials and expanding degrees of freedom in the design. In addition, the active optical cable connection structure 1 leads to improved reliability of optical coupling components against vibration and enhanced EMC reliability on optical fiber transmission lines.

As described above, the active optical cable connection structure 1 according to the present embodiment includes the flat cable 10 and the optical fiber cable 50 that is routed along the upper surface of the flat cable 10. The active optical cable connection structure 1 includes the pair of first electrical connectors 30 and 30 connected to the flat cable 10, and the pair of optical active connectors 40 and 40 connected to the pair of first electrical connectors 30 and 30 and provided at both ends of the optical fiber cable 50. Therefore, the active optical cable connection structure 1 integrates the active optical cable and the flat cable 10. The active optical cable connection structure 1 can suppress the deterioration of reliability due to impact at the time of routing by fixing and routing the optical fiber cable 50 to the flat cable 10 after mounting the wiring harness or the flat cable 10. Therefore, according to the present invention, it is possible to provide the active optical cable connection structure in which reliability is improved by integrating the active optical cable and the flat cable.

Although the present invention has been described above by reference to the embodiment, the present invention is not limited to those and the configuration of parts can be replaced with any configuration having a similar function, as long as they lie within the scope of the claims.

## Claims

1. An active optical cable connection structure (1) comprising:
a flat cable (10);
an optical fiber cable (50) that is routed along an upper surface of the flat cable (10);
a pair of first electrical connectors (30, 30) connected to the flat cable (10); and
a pair of optical active connectors (40, 40) connected to the pair of first electrical connectors (30, 30) and provided at both ends of the optical fiber cable (50).

2. The active optical cable connection structure (1) according to claim 1, further comprising a pair of second electrical connectors (20, 20) at both ends of the flat cable (10).
